# EUROPEAN PATENT SPECIFICATION

(11) **EP 1 331 173 B1**
(45) Date of publication and mention of the grant of the patent: **18.10.2006**
(21) Application number: 01972611.6
(22) Date of filing: 28.09.2001
(51) Int. Cl.: B65D 5/74, B65D 5/72

(54) **PAPER CONTAINER**
PAPIERBEHÄLTER
CONTENANT EN PAPIER

(30) Priority: 29.09.2000 JP 2000299241
(43) Date of publication of application: 30.07.2003
(73) Proprietor: NIPPON PAPER INDUSTRIES CO., LTD., Kita-ku, Tokyo 114-0002 (JP)
(72) Inventor: TAKAHASHI, Hisao, Nippon Paper Ind. Co. Ltd., Tokyo 114-0002 (JP); SASE, Kazuhiko, Nippon Paper Ind. Co. Ltd., Tokyo 114-0002 (JP); OKUDE, Hideki, Nippon Paper Ind. Co. Ltd., Tokyo 114-0002 (JP)
(74) Representative: Rees, Alexander Ellison
(86) International application number: PCT/JP2001/008580
(87) International publication number: WO 2002/026572

(56) References cited:
- EP-A1- 0 444 862
- DE-U- 9 015 250
- GB-A- 880 024
- JP-A- 8 230 872
- JP-A- 9 024 583
- JP-U- 4 124 913
- JP-U- 63 026 513

## Description

### TECHNICAL FIELD

The present invention relates to a paper container for liquid foods, which is of a laminate structure made of a container material from which aluminum foil is omitted and which includes a thin paper used in a layered material that covers a liquid take-out port from inside to make a construction closer to that of a natural material.

### BACKGROUND ART

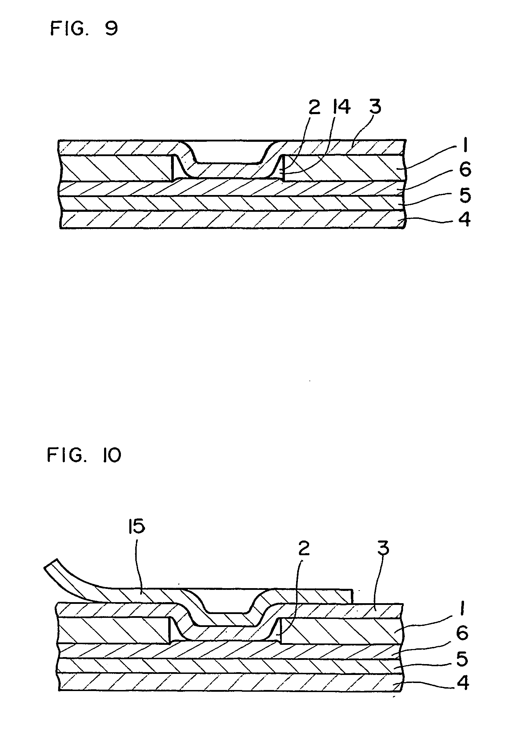

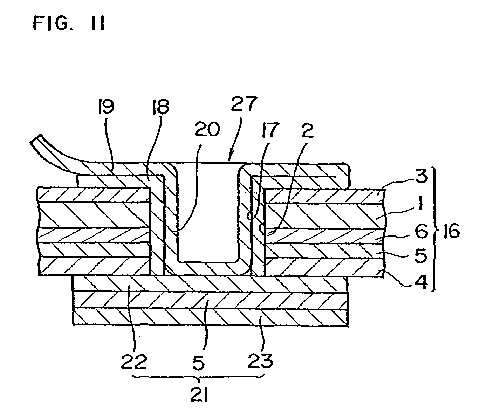

As paper containers for storing liquid foods such as milk and juice, those generally used have a layer structure in which a base material 1 made of paper and provided with a through-hole 2 serving as a liquid take-out port is laminated with synthetic resin layers 3 and 4 made of a synthetic resin such as low density polyethylene on at least the outermost surface and innermost surface (the surface where the liquid contacts the content) thereof as shown in Figs. 9 and 10.

Fig. 9 shows a paper container with a straw hole, with the above-mentioned through-hole 2 serving as a straw hole 14. This is designed to pierce a straw through the synthetic resin layers 3 and 4 that block the through hole 2 in the base material 1 to open the through-hole 2.

Fig. 10 shows a paper container of the pull-tab type in which a pull-tab 15 is bonded to the portion where the through-hole 2 provided in the above-mentioned base material 1 is blocked with the synthetic resin layer 3 constituting an outermost surface of the laminate. This is designed such that pulling up the pull-tab 15 will cut off the portions of the synthetic resins 3 and 4 that block the through-hole 2 provided in the above-mentioned base material 1, thereby opening the through-hole 2.

Fig. 11 shows a paper container with an opening device that includes a container material 16 of a laminate construction having a base material 1 made of paper with at least the outermost and innermost surfaces thereof being constituted by synthetic resin layers 3 and 4. The container material 16 is provided with a through-hole 2 serving as a liquid take-out port and a lower plate 18 made of a synthetic resin having a through-hole 17 of a size equivalent to or smaller than the through-hole 2 is bonded to the surface of the container material 16 such that the through-hole 17 of the lower plate 18 is positioned in the through-hole 2 formed in the above-mentioned container material 16. In the through-hole 17 of the above-mentioned lower plate 18, an engaging projection 20 that an upper plate 19 has is fitted from the surface side of the container material 16 and from the rear side of the above-mentioned container material 16 is bonded a synthetic resin film 21 to the periphery of the above-mentioned through-hole 2 and the top surface of the engaging projection 20 of the above-mentioned upper plate 19 to provide an opening device 27. This paper container is designed such that pulling up the upper plate 19 from the lower plate 18 will cut off the portion of the synthetic resin film 21 that is bonded to the periphery of the above-mentioned through-hole 2 of the above-mentioned container material 16 and the top surface of the engaging projection 20 of the above-mentioned upper plate 19 and that blocks the through-hole 2, thereby opening the through-hole 2.

In the case of commercial products that require long-term storage and have the contents sensitive to oxidation/deterioration, an aluminum foil layer 5 is laminated as a barrier layer in the above-mentioned paper container.

In the above-mentioned paper containers shown in Figs. 9 and 10, the aluminum foil layer 5 is laminated between the base material 1 and the synthetic resin layer 4. Between the base material 1 and the aluminum foil layer 5 is provided an adhesive layer 6 made of a synthetic resin. Also in the paper container shown in Fig. 11, the aluminum foil layer 5 is laminated between the base material 1 and the synthetic resin layer 4. Between the base material 1 and the aluminum foil layer 5 is provided an adhesive layer 6 made of a synthetic resin. Further, the synthetic resin film 21 is of a three-layer structure in which the aluminum foil layer 5 is laminated between two synthetic resin layers 22 and 23, with the periphery of the above-mentioned through-hole 2 of the container material 16 and the top surface of the engaging projection 20 of the above-mentioned upper plate 19 being bonded to the synthetic resin layer 22.

However, in these days, it is demanded to recover and reuse wood fiber of paper containers as easily as possible from the viewpoint of recycling of container packages, and a paper container without the aluminum foil layer 5 is demanded. Also, from the viewpoint of disposal of waste paper containers, a paper container without the aluminum foil layer 5 is demanded.

Accordingly, paper containers for long-term storage with a synthetic resin layer made of an ethylene/vinyl alcohol copolymer, an aliphatic polyamide, or the like as a barrier layer in place of the aluminum foil layer 5 have come into sight. For example, in paper containers with the above-mentioned straw hole or paper containers of the pull-tab type, in which an ethylene/vinyl alcohol copolymer or the like is used as a barrier layer in place of the aluminum foil layer 5, the through-hole 2 is blocked with at least three resin layers: two layers composed of a synthetic resin layer serving as a barrier layer and a synthetic resin layer serving as a liquid contact surface, and one layer constituting the outermost layer. Also, in paper containers provided with the above-mentioned opening device in which an ethylene/vinyl alcohol copolymer or the like is used as a barrier layer in place of the aluminum foil layer 5, a synthetic resin layer serving as a barrier layer and a synthetic resin layer serving as a liquid contact surface are laminated inside the base material 1, and further, a synthetic resin layer serving as a barrier layer is laminated on the synthetic resin film 21.

However, in the case of paper containers with a straw hole, in which the straw hole 14 is blocked with three resin layers, a problem arises that when piercing a straw through the resin layers to open the straw hole 14, the synthetic resin layer films at the portion of the straw hole 14 are elongated due to the elongating property inherent to the synthetic resin layers, making it difficult to smoothly pierce the straw. Also, in paper containers of the pull-tab type, a problem arises that when pulling up the pull-tab 15 to open the through-hole 2, the synthetic resin layer films at the portion of the through-hole 2 are elongated due to the elongating property inherent to the synthetic resin layers, making it difficult to cut off the synthetic resin layers, resulting in a failure to neatly open the through-hole 2. Similarly, in paper containers with an opening device, a problem arises that when pulling up the upper plate 19 from the lower plate 18 to open the through-hole 2, the synthetic resin layer and synthetic resin film at the portion of the through-hole 2 are elongated due to the elongating property inherent to the synthetic resin layer and synthetic resin film, making it difficult to cut off the synthetic resin layer and synthetic resin film, resulting in a failure to neatly open the through-hole 2.

Needless to say, not only paper containers for long-term storage with a barrier layer made of a synthetic resin layer in place of the aluminum foil layer but also the simplest paper containers with a straw hole including those of the pull-tab type and those with an opening device, but that have no aluminum foil layer nor barrier layer made of a synthetic resin layer, would encounter similar problems. In addition, such problems will become bigger as the number of the resin layers inside the through-hole 2 increases; therefore, they have become particularly serious problems in paper containers provided with a barrier layer made of a synthetic resin.

As paper containers intended to solve such problems, there are ones provided with double half cuts on both the inner and outer sides thereof in order to open the paper container. In this method, however, problems will arise that a step of providing half cuts is added to the process of producing a paper container to increase the number of steps therein and require an apparatus therefor.

### DISCLOSURE OF THE INVENTION

Therefore, with a view to enabling the through-hole 2 serving as a liquid take-out port to be opened smoothly without resort to means such as double half cuts from inner and outer surfaces, the inventors of the present invention have made extensive studies on the breakage of the synthetic resin layers 3 and 4 and synthetic resin film 21 that block the through-hole 2 serving as a liquid take-out port. As a result, they have confirmed that in the conventional paper containers in which the aluminum foil layer 5 is used as a barrier layer, the rigidity of the aluminum foil layer 5 influences the rupturability of the synthetic resin layers 3 and 4 and synthetic resin film 21 and have focused attention to lamination and integration of a rigid material in place of the aluminum foil layer to the synthetic resin layers 3 and 4 and synthetic resin film 21, thereby achieving the present invention.

An object of the present invention is to provide a paper container that allows opening of a liquid take-out port to be performed easily and neatly.

The object of the present invention is achieved by providing a paper container that includes a laminate structure having a base material made of paper, at least outermost and innermost surfaces of the laminate structure being constituted by synthetic resin layers, respectively, the above-mentioned base material being provided with a through-hole serving as a liquid take-out port, in which the paper container is of a laminate construction in which the above-mentioned through-hole is covered from inside by a layered material of at least two layers consisting of a synthetic resin layer and a thin paper layer integrated to each other; wherein;
at least one thin paper layer is composed of wood fiber and/or non-wood fiber having a basis weight of 5 to 65 g/m².

The respective interlayer strengths between the thin paper layer and each of the adjacent synthetic resin layers in the above-mentioned layered material that covers the above-mentioned through-hole from inside are at least 30 g/15 mm or more. The interlayer strength indicates a force required for peeling each layer when each layer of a rectangular test piece with a width of 15 mm was drawn in the direction at an angle of 180 degrees by using a tensile test machine.

At least one of the above-mentioned synthetic resin layers of the above-mentioned layered material that cover the above-mentioned through-hole from inside has at least barrier property or light-shielding property.

At least one of the above-mentioned thin paper layer of the above-mentioned layered material that covers the above-mentioned through-hole from inside is imparted with at least barrier property or light-shielding property by printing or the like.

Further, the object of the present invention is achieved by providing a paper container that includes a container material of a laminate structure having a base material made of paper, at least outermost and innermost surfaces of the laminate structure being constituted by synthetic resin layers, the container material being provided with a first through-hole serving as a liquid take-out port, a lower plate made of a synthetic resin provided with a second through-hole of a size equivalent to or smaller than the first through-hole being bonded to the surface of the container material with the second through-hole of the lower plate being positioned in the first through-hole formed in the above-mentioned container material, and an upper plate having an engaging projection which is fitted in the second through-hole of the above-mentioned lower plate from a surface side of the container material, and a synthetic resin film bonded to a periphery of the above-mentioned first through-hole and the top surface of the engaging projection of the above-mentioned upper plate from a rear side of the above-mentioned container material to define an opening device, in which the above-mentioned synthetic resin film includes a thin paper integrally laminated thereto to form a layered material comprising two or more layers; and
at least one thin paper laminated to the above-mentioned layered material includes wood fiber and/or non-wood fiber having a basis weight of 5 to 65 g/m².

The respective interlayer strengths between the above-mentioned thin paper and each of the adjacent laminate are at least 30 g/15 mm or more.

At least one layer of the above-mentioned layered material has at least barrier property or light-shielding property.

At least one of the above-mentioned thin papers is imparted with at least barrier property or light-shielding property by printing or the like.

### BRIEF DESCRIPTION OF THE DRAWINGS

Fig. 1 is a cross-sectional view showing a laminate structure of a paper container according to Example 1 of the present invention;
Fig. 2 is a cross-sectional view showing a laminate structure of a paper container according to Example 2 of the present invention;
Fig. 3 is a cross-sectional view showing a laminate structure of a paper container according to Example 3 of the present invention;
Fig. 4 is a cross-sectional view showing a laminate structure of a paper container according to Example 5 of the present invention;
Fig. 5 is a cross-sectional view showing a laminate structure of a paper container according to Comparative Example 1;
Fig. 6 is a cross-sectional view showing a laminate structure of a paper container according to Comparative Example 2;
Fig. 7 is a cross-sectional view showing a laminate structure of a paper container according to Comparative Example 3;
Fig. 8 is a cross-sectional view showing a main part of a paper container according to Example 6 of the present invention;
Fig. 9 is a cross-sectional view showing one example of a layer structure of a conventional paper container;
Fig. 10 is a cross-sectional view showing another example of a layer structure of a conventional paper container; and
Fig. 11 is a cross-sectional view showing a main part of still another example of a conventional paper container.

Hereinafter, the paper container of the present invention will be described in detail with reference to the drawings illustrating examples thereof.

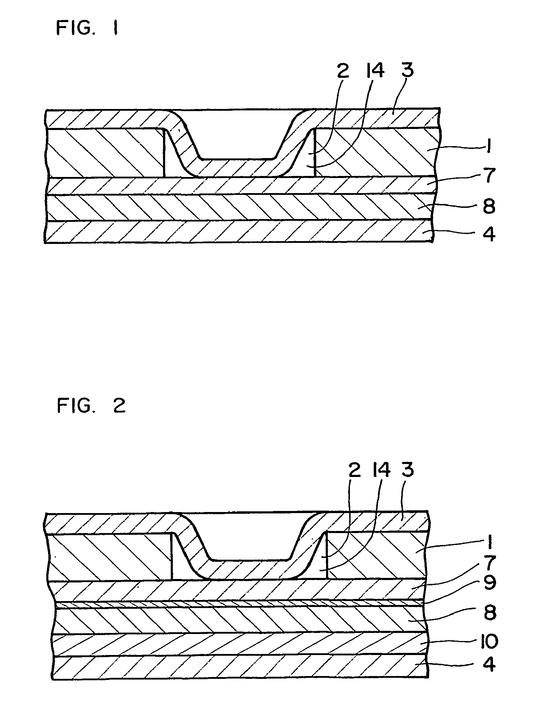

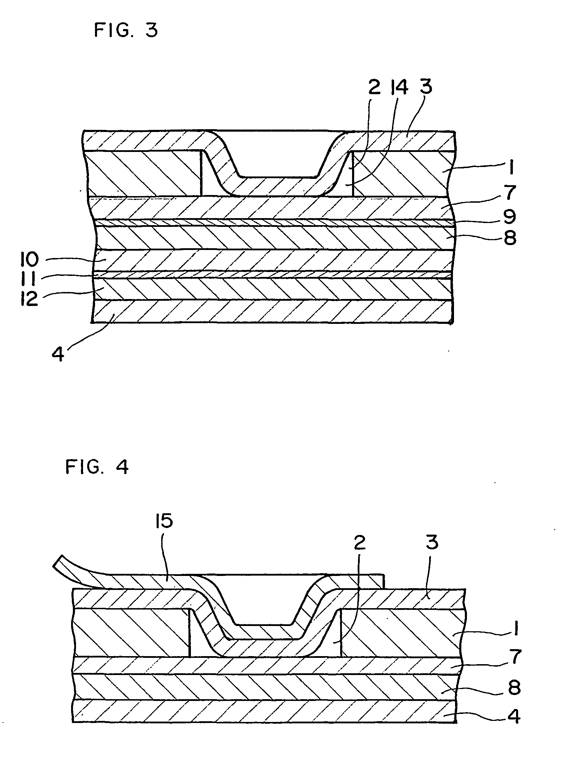

Figs. 1 to 3 illustrate Examples 1 to 3 embodying paper containers provided with a straw hole, respectively, and Fig. 4 illustrates Example 5 embodying a paper container of the pull-tab type.

The paper containers provided with a straw hole and the paper container of the pull-tab type shown in the respective examples include a laminated structure, in which at least the outermost and innermost surfaces of the laminate construction having a base material 1 made of paper are constituted by synthetic resin layers 3 and 4. The above-mentioned base material 1 is provided with a through-hole 2 serving as a liquid take-out port. At least the above-mentioned through-hole 2 is covered from inside by a layered material of at least two layers made of an integration of the synthetic resin layer 4 or 10 and a thin paper layer 8.

The above-mentioned base material 1 is the same as the base material in conventional paper containers of this type and is not particularly limited but preferably it has a basis weight of 150 to 400 g/m².

Further, preferred examples of the resin for the synthetic resin layer 3 on the outermost surface include low-density polyethylene (LDPE), medium-density polyethylene (MDPE), high-density polyethylene (HDPE), linear low-density polyethylene (LLDPE), polyesters, copolyesters, etc.

Furthermore, the thin paper layer 8 is preferably made of wood fiber and/or non-wood fiber having a basis weight of 5 to 65 g/m². If the basis weight is less than 5 g/m², the resistance at the time of piercing a straw through or cutting off of the thin paper layer is low but the rigidity is decreased, so that the straw piercing property or property of cutting off the thin paper layer becomes poor. On the other hand, the basis weight of 65 g/m² or more results in a high rigidity but an increased resistance at the time of piercing a straw through or cutting off the thin paper.

Moreover, the density of the thin paper in the thin paper layer 8 is preferably 0.50 to 1.20 g/m³ taking into consideration the resistance at the time of piercing a straw or of cutting off. The thin paper layer 8 does not necessarily have to be laminated on the entire surface of the base material 1 but it may be laminated in the region where the through-hole 2 is blocked.

Still further, the synthetic resin layer to be integrated with the above-mentioned thin paper layer 8 is not particularly limited. As such a synthetic resin layer, the synthetic resin layer 4 on the innermost surface, the synthetic resin layer 10 having gas-barrier property, a light-shielding colored resin layer containing, for example, carbon black, a masking synthetic resin layer containing titanium oxide, etc. may be exemplified.

As the resin in the synthetic resin layer 4 on the innermost surface, low-density polyethylene, medium-density polyethylene, high-density polyethylene, linear low-density polyethylene, polyesters, copolyesters, and low-density polyethylenes synthesized with metallocene catalysts are preferred. As the resin for the synthetic resin layer 10 having barrier property, nylons, polyesters, copolyesters, ethylene/vinyl alcohol (EVOH), polyvinyl alcohol (PVOH), silica-deposited films, etc. are preferred.

Also, the above-mentioned thin paper layer 8 may be imparted with barrier property, light-shielding property, masking property, etc. by printing or the like. In this case, it is preferred that the thin paper layer 8 be laminated on the entire surface of the base material.

When the above-mentioned thin paper layer 8 assumes a structure in which it contacts the base material 1, a synthetic resin layer serving as an adhesive is laminated between the thin paper layer 8 and the base material 1. As the resin for the synthetic resin layer serving as an adhesive, low-density polyethylene, medium-density polyethylene, high-density polyethylene, linear low-density polyethylene, polyesters, copolyesters, modified low-density polyethylenes, etc. are preferred.

Also, between the above-mentioned base material 1 and the synthetic resin layer 4 on the innermost surface, there may be laminated plural synthetic resin layers or thin paper layers in addition to the above-mentioned layers. At least one of such synthetic resin layers or thin paper layers may be imparted with the barrier property, light-shielding property, masking property, etc. as described above.

In the layered material that constitutes the paper containers shown in Figs. 1 to 4, the respective interlayer strengths between the synthetic resin layer 4 or 10 and the thin paper layer 8 and between the synthetic resin layer 7 and the thin paper layer 8 are preferably at least 30 g/15 mm or more.

When the respective interlayer strengths between the synthetic resin layer 4 or 10 and the thin paper layer 8 and between the synthetic resin layer 7 and the thin paper layer 8 in the layered material that covers the through-hole from inside is at least 30 g/15 mm or more in this way as described above, the interlayer strengths between the synthetic resin layer 4 or 10 and the thin paper layer 8 and between the synthetic resin layer 7 and the thin paper layer 8 become strong, so that it is ensured that the rigidity of the thin paper layer 8 can be imparted to the synthetic resin layer 7 and the synthetic resin layer 4 or 10, thereby enabling suppression of the elongating property of the synthetic resin layer 7 and the synthetic resin layer 4 or 10 with reliability, resulting in improved straw piercing property through the straw hole portion or improved property of cutting off the straw hole portion.

Next, the examples shown in Figs. 1 to 4 referred to above will be described in more detail.

### (Example 1)

Fig. 1 is a cross-sectional view showing a laminate structure of a paper container with a straw hole according to Example 1 of the present invention.

This paper container has a laminate structure, in which the thermoplastic synthetic resin layer 3 made of a low-density polyethylene layer and having a thickness of 15 µm, the base material 1 having a basis weight of 200 g/m² provided with the through-hole 2 serving as the straw hole 14, the thermoplastic synthetic resin layer 7 made of a low-density polyethylene and having a thickness of 15 µm, the thin paper layer 8 having a basis weight of 30 g/m² and a thickness of 40 µm, and the thermoplastic synthetic resin layer 4 made of a low-density polyethylene and having a thickness of 15 µm are laminated from the outside toward the inside (the side where the content contacts the liquid).

The layered material having the above-mentioned laminate structure was produced as follows. First, the thin paper layer 8 was bonded and laminated onto the inside of the base material 1 through the thermoplastic synthetic resin layer 7 made of a low-density polyethylene and having a thickness of 15 µm by sandwich lamination. Subsequently, the thermoplastic synthetic resin layers 3 and 4 made of a low-density polyethylene layer and having a thickness of 15 µm, were extrusion laminated on both the outermost and innermost surfaces of the resultant, respectively.

The materials used then were as follows. The low-density polyethylene as the thermoplastic synthetic resin layers 3, 4, and 7 was MIRASON 16P manufactured by Mitsui Chemical, Inc. The base material 1 was a paperboard having a basis weight of 200 g/m², made from virgin pulps of a conifer and a broad-leaf tree, and the thin paper layer 8 having a basis weight of 30 g/m², made from virgin pulps of a conifer and a broad-leaf tree. Incidentally, the respective interlayer bonding strengths between the thin paper layer 8 and the thermoplastic synthetic resin layer 7 or 4 on both sides thereof made of a low-density polyethylene on this occasion were 80 g/15 mm.

### (Example 2)

Fig. 2 is a cross-sectional view showing a laminate structure of a paper container with a straw hole according to Example 2 of the present invention.

This paper container has a laminate structure, in which the thermoplastic synthetic resin layer 3 made of a low-density polyethylene and having a thickness of 15 µm, the base material 1 having a basis weight of 200 g/m² provided with the through-hole 2 serving as the straw hole 14, the thermoplastic synthetic resin layer 7 made of a low-density polyethylene and having a thickness of 15 µm, a black printing layer 9, the thin paper layer 8 having a basis weight of 40 g/m² and a thickness of 50 µm, the barrier resin layer 10 made of ethylene/vinyl alcohol and having a thickness of 10 µm and the thermoplastic synthetic resin layer 4 made of a low-density polyethylene and having a thickness of 20 µm are laminated from the outside toward the inside (the side where the content contacts the liquid).

The layered material having the above-mentioned laminate structure was produced as follows. First, the thin paper layer 8 provided with the black printing layer 9 was bonded and laminated onto the inside of the base material 1 with the black printing layer 9 directed toward the base material 1 through the thermoplastic synthetic resin layer 7 made of a low-density polyethylene and having a thickness of 15 µm by sandwich lamination. Subsequently, the thermoplastic synthetic resin layer 3 made of a low-density polyethylene and having a thickness of 15 µm, was extrusion laminated on the outermost surface of the resultant and the barrier resin layer10 made of ethylene/vinyl alcohol and having a thickness of 10 µm and the thermoplastic synthetic resin layer 4 made of a low density polyethylene and having a thickness of 20 µm were co-extrusion laminated on the innermost surface of the resultant such that the barrier resin layer 10 contacts with the thin paper layer 8.

The materials used then were as follows. The low-density polyethylene used as the thermoplastic synthetic resin layers 3 and 7 was MIRASON 16P manufactured by Mitsui Chemical, Inc. The base material 1 was a paperboard having a basis weight of 200 g/m², made from virgin pulps of a conifer and a broad-leaf tree, and the thin paper layer 8 having a basis weight of 40 g/m², made from virgin pulps of a conifer and a broad-leaf tree. The ethylene/vinyl alcohol as the barrier resin layer 10 was EP-E105 manufactured by Kuraray Co., Ltd. and the low-density polyethylene as the thermoplastic synthetic resin layer 4 as the innermost layer was J-Rex 154 manufactured by Japan Polyolefins Co., Ltd. Incidentally, the respective interlayer strengths between the thin paper layer 8 and the thermoplastic synthetic resin layer 7 made of a low-density polyethylene or the barrier resin layer 10 made of ethylene/vinyl alcohol on this occasion were 70 g/15 mm.

### (Example 3)

Fig. 3 is a cross-sectional view showing a laminate structure of a paper container with a straw hole according to Example 3 of the present invention.

This paper container has a laminate structure, in which the thermoplastic synthetic resin layer 3 made of a low-density polyethylene having a thickness of 15 µm, the base material 1 having a basis weight of 200 g/m² provided with the through-hole 2 serving as the straw hole 14, the thermoplastic synthetic resin layer 7 made of a low-density polyethylene having a thickness of 15 µm, the black printing layer 9, the thin paper layer 8 having a basis weight of 20 g/m² and a thickness of 30 µm, the barrier resin layer 10 made of ethylene/vinyl alcohol having a thickness of 10 µm, a white printing layer 11, a thin paper layer 12 having a basis weight of 20g/m² and a thickness of 30 µm, and the thermoplastic synthetic resin layer 4 made of a low-density polyethylene having a thickness of 20 µm are laminated from the outside toward the inside (the side where the content contacts the liquid).

The layered material having the above-mentioned laminate structure was produced as follows. First, the thin paper layer 8 provided with the black printing layer 9 was bonded and laminated onto the inside of the base material 1 with the black printing layer 9 directed toward the base material 1 through the thermoplastic synthetic resin layer 7 made of a low-density polyethylene and having a thickness of 15 µm by sandwich lamination. Further, the thin paper layer 12 provided with the white printing layer 11 was bonded and laminated onto the inside of the resultant, with the white printing layer 11 directed toward the base material 1 through the barrier resin layer 10 made of ethylene/vinyl alcohol and having a thickness of 10 µm by sandwich lamination. Then, the thermoplastic resin layer 3 made of a low-density polyethylene having a thickness of 15 µm was extrusion laminated on the outermost surface of the resultant and the thermoplastic resin layer 4 made of a low-density polyethylene having a thickness of 20 µm was extrusion laminated on the innermost surface of the resultant.

The materials used then were as follows. The low-density polyethylene as the thermoplastic synthetic resin layers 3 and 7 was MIRASON 16P manufactured by Mitsui Chemical, Inc. The base material 1 was a paperboard having a basis weight of 200 g/m², made from virgin pulps of a conifer and a broad-leaf tree, and the thin paper layer 8 and 12 having a basis weight of 20 g/m², made from virgin pulps of a conifer and a broad-leaf tree. The ethylene/vinyl alcohol as the barrier resin layer 10 was EP-E105 manufactured by Kuraray Co., Ltd. and the low-density polyethylene as the thermoplastic synthetic resin layer 4 as the innermost layer was J-Rex 154 manufactured by Japan Polyolefins Co., Ltd. Incidentally, the respective interlayer strengths between the thin paper layer 8 and the thermoplastic synthetic resin layer 7 made of a low-density polyethylene or the barrier resin layer 10 made of ethylene/vinyl alcohol, and the respective interlayer strengths among the thin paper layer 12 and the barrier resin layer 10 made of ethylene/vinyl alcohol and thermoplastic resin layer 4 made of a low density polyethylene, on this occasion were 50 to 70 g/15 mm.

### (Example 4)

The paper container of this example though not shown had the same laminate structure as that in Example 1 except the basis weight of the thin paper layer 8. The thin paper layer 8 in this example had a basis weight of 65 g/m² and a thickness of 80 µm.

### (Example 5)

Fig. 4 is a cross-sectional view showing a laminate structure of a paper container of the pull-tab type according to Example 5 of the present invention.

In this paper container, the thermoplastic synthetic resin layer 3 made of the low-density polyethylene layer and having a thickness of 15 µm, the base material 1 having a basis weight of 200 g/m² provided with the through-hole 2, the thermoplastic synthetic resin layer 7 made of the low-density polyethylene and having a thickness of 15 µm, the thin paper layer 8 having a basis weight of 30 g/m² and a thickness of 40 µm, and the thermoplastic synthetic resin layer 4 made of a low-density polyethylene having a thickness of 15 µm are laminated from the outside toward the inside (the side where the content contacts the liquid). A pull-tab 15 was bonded by heat sealing to the portion where the synthetic resin layer 3 on the outermost surface of the layered material blocks the through hole 2 provided in the above-mentioned base material 1.

The layered material having the above-mentioned laminate structure was produced as follows. First, the thin paper layer 8 was bonded and laminated onto the inside of the base material 1 through the thermoplastic synthetic resin layer 7 made of a low-density polyethylene and having a thickness of 15 µm by sandwich lamination. Subsequently, the thermoplastic synthetic resin layers 3 and 4 made of a low-density polyethylene and having a thickness of 15 µm, were extrusion laminated on both the outermost and innermost surfaces of the resultant, respectively.

The materials used then were as follows. The low-density polyethylene as the thermoplastic synthetic resin layers 3, 4, and 7 was MIRASON 16P manufactured by Mitsui Chemical, Inc. The base material 1 was a paperboard having a basis weight of 200 g/m², made from virgin pulps of a conifer and a broad-leaf tree, and the thin paper layer 8 having a basis weight of 30 g/m², made from virgin pulps of a conifer and a broad-leaf tree. Incidentally, the respective interlayer bonding strengths between the thin paper layer 8 and the thermoplastic synthetic resin layer 7 or 4 on both sides thereof made of a low-density polyethylene on this occasion were 80 g/15 mm.

As other examples of the paper container of the pull-tab type, though not illustrated, mention may be made of those paper containers that have the same laminate structures as those in Examples 2 to 4 except that the pull-tab 15 is bonded by heat sealing to the portion where the through-hole 2 provided in the base material 1 is blocked by the synthetic resin layer 3 on the outermost surface of the layered material.

### (Comparative Example 1)

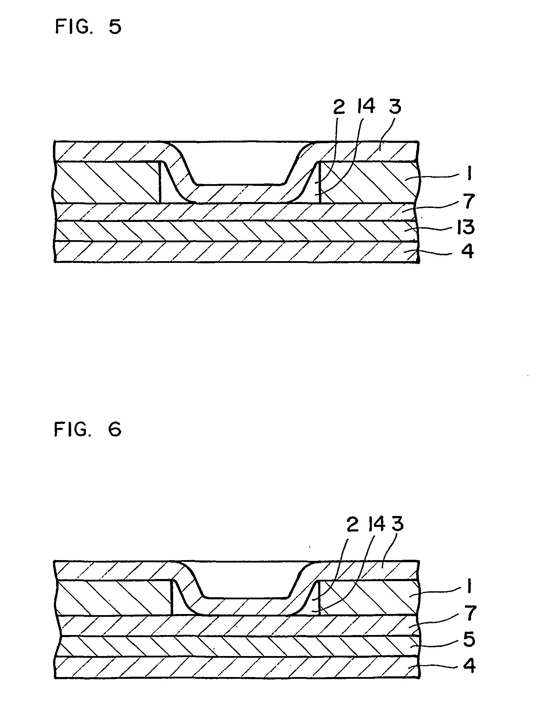

Fig. 5 is a cross-sectional view showing a laminate structure of a paper container with a straw hole according to Comparative Example 1 of the present invention.

This paper container has a laminate structure, in which the thermoplastic synthetic resin layer 3 made of a low-density polyethylene and having a thickness of 15 µm, the base material 1 having a basis weight of 200 g/m² provided with the through-hole 2 serving as the straw hole 14, the thermoplastic synthetic resin layer 7 made of a low-density polyethylene and having a thickness of 15 µm, a chemical pulp paper layer 13 having a basis weight of 81 g/m² and a thickness of 100 µm, and the thermoplastic synthetic resin layer 4 made of a low-density polyethylene and having a thickness of 15 µm are laminated from the outside toward the inside (the side where the content contacts the liquid).

### (Comparative Example 2)

Fig. 6 is a cross-sectional view showing a laminate structure of a paper container with a straw hole according to Comparative Example 2 of the present invention.

This paper container has a laminate structure, in which the thermoplastic synthetic resin layer 3 made of a low-density polyethylene layer and having a thickness of 15 µm, the base material 1 having a basis weight of 200 g/m² provided with the through-hole 2 serving as the straw hole 14, the thermoplastic synthetic resin layer 7 made of a low-density polyethylene and having a thickness of 30 µm, an aluminum foil layer 5 having a thickness of 7 µm, and the thermoplastic synthetic resin layer 4 made of a low-density polyethylene and having a thickness of 35 µm are laminated from the outside toward the inside (the side where the content contacts the liquid).

### (Comparative Example 3)

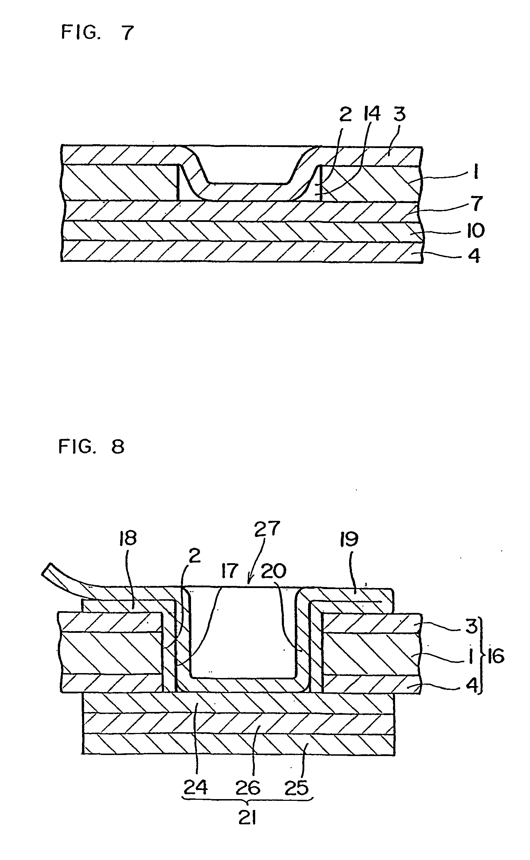

Fig. 7 is a cross-sectional view showing a laminate structure of a paper container with a straw hole according to Comparative Example 3 of the present invention.

This paper container has a laminate structure, in which the thermoplastic synthetic resin layer 3 made of a low-density polyethylene layer and having a thickness of 15 µm, the base material 1 having a basis weight of 200 g/m² provided with the through-hole 2 serving as the straw hole 14, the thermoplastic synthetic resin layer 7 made of a low-density polyethylene and having a thickness of 20 µm, the barrier resin layer 10 made of ethylene/vinyl alcohol and having a thickness of 8 µm, and the thermoplastic synthetic resin layer 4 made of a low-density polyethylene and having a thickness of 20 µm are laminated from the outside toward the inside (the side where the content contacts the liquid).

Table 1 shows the results of evaluation of the straw piercing property of the paper containers in Examples 1 to 4 and Comparative Examples 1 to 3 described above by actually piercing a straw into the straw hole.

**[Table 1]**

| Structure of straw hole | | Results of evaluation | Memorandum |
|---|---|---|---|
| Example | 1 | ○ | |
| | 2 | ○ | |
| | 3 | ○ | |
| | 4 | Δ | Opens but are slightly hard. |
| Comparative Example | 1 | × | Hard and difficult to open. |
| | 2 | ○ | |
| | 3 | × | Resin is elongated. |

| | | | |
|---|---|---|---|
| ○: Good Δ : Fair ×: with a problem | | | |

Fig. 8 illustrates Example 6 embodying a paper container with an opening device and is a cross-sectional view showing the main part of this paper container with an opening device.

In the paper container with an opening device shown in this example, the container material 16 of a laminate structure has the base material 1 made of paper with at least the outermost and innermost surfaces thereof being constituted by the synthetic resin layers 3 and 4. The container material 16 is provided with the through-hole 2 serving as a liquid take-out port and the lower plate 18 made of a synthetic resin having the through-hole 17 of a size equivalent to or smaller than the through-hole 2 is bonded to the surface of the container material 16 such that the through-hole 17 of the lower plate 18 is positioned in the through-hole 2 formed in the above-mentioned container material 16. In the through-hole 17 of the above-mentioned lower plate 18, an engaging projection 20 that an upper plate 19 has is fitted from the surface side of the container material 16, and from the rear side of the above-mentioned container material 16 is bonded the synthetic film 21 having two synthetic resin layers 24 and 25 and a thin paper 26 integrally laminated to each other to the periphery of the above-mentioned through-hole 2 and the top surface of the engaging projection 20 of the above-mentioned upper plate 19 to provide an opening device 27. In this example, a layered material of a three-layer structure was used as the synthetic resin film 21 but the present invention is not particularly limited thereto.

The above-mentioned base material 1 is the same as the base material in conventional paper containers of this type and is not particularly limited but preferably it has a basis weight of 150 to 400 g/m².

Further, as the resin for the synthetic resin layer 3 on the outermost surface, low-density polyethylene, medium-density polyethylene, high-density polyethylene, linear low-density polyethylene, polyesters, copolyesters, etc. are preferred.

Furthermore, as the resin for the synthetic resin layer 4 on the innermost surface, low-density polyethylene, medium-density polyethylene, high-density polyethylene, linear low-density polyethylene, polyesters, copolyesters, and low-density polyethylenes synthesized with metallocene catalysts are preferred.

Moreover, as the resin for the synthetic resin layer 25 on the liquid surface side from the synthetic resin layers 24 and 25 that constitute the above-mentioned synthetic resin film 21, low-density polyethylene, medium-density polyethylene, high-density polyethylene, linear low-density polyethylene, polyesters, copolyesters, and low-density polyethylenes synthesized with metallocene catalysts are preferred. Other examples for the synthetic resin layer 24 are not particularly limited; an adhesive synthetic resin layer, a synthetic resin layer having gas-barrier property, and further, a light-shielding colored resin layer containing, for example, carbon black, a masking synthetic resin layer containing titanium oxide, etc. may be laminated. As the resins for the synthetic resin layer having barrier property, nylons, polyesters, copolyesters, ethylene/vinyl alcohol, polyvinyl alcohol, silica-deposited films, etc. are preferred.

It is preferred that the thin paper 26 laminated between the synthetic resin layers 24 and 25 that constitute the above-mentioned synthetic resin film 21 be made of wood fiber and/or non-wood fiber having a basis weight of 5 to 65 g/m². If the basis weight is less than 5 g/m², the resistance at the time of cutting off the thin paper layer is low but the rigidity is decreased, so that the cutting property of thereof becomes worse. On the other hand, the basis weight of 65 g/m² or more results in a high rigidity but an increased resistance at the time of cutting off. Moreover, the density of the thin paper 26 is preferably 0.50 to 1.20 g/m³ taking into consideration the resistance at the time of cutting off.

Still further, the respective interlayer strengths between the synthetic resin layers 24 and 25 that constitute the above-mentioned synthetic resin film 21 and the thin paper 26 are preferably at least 30 g/15 mm.

Thus, when the respective interlayer strengths between the synthetic resin layers 24 and 25 that constitute the synthetic resin film 21 and the thin paper 26 are at least 30 g/15 mm, the respective interlayer strengths between the synthetic resin layer 24 and 25 and the thin paper 26 become strong, so that it is ensured that the rigidity of the thin paper 26 can be imparted to the synthetic resin film 21, thereby enabling suppression of the elongating property of the synthetic resin film 21 with reliability, resulting in improved property of cutting off the straw hole portion of the through-hole 2.

### INDUSTRIAL APPLICABILITY

As described above, the paper container according to the present invention includes a laminate structure having a base material made of paper, at least the outermost and innermost surfaces of which are constituted by synthetic resin layers, the above-mentioned base material being provided with a through-hole serving as a liquid take-out port. In this paper container, at least the above-mentioned through-hole is covered from inside by a layered material of at least two layers made of an integration of the synthetic resin layer and a thin paper layer. Because of this laminate structure, the rigidity of the thin paper layer can be imparted to the synthetic resin layer to which the thin paper layer is integrated, thereby suppressing the elongating property of the synthetic resin layer, so that piercing of a straw into the through-hole part or cutting off of the through-hole part can be facilitated. Therefore, even those paper containers in which a synthetic resin layer having gas barrier property is used as a barrier layer in place of an aluminum foil layer can facilitate the piercing of a straw into the through-hole part or cutting off of the through-hole part.

Furthermore, the paper container of the present invention includes a container material of a laminate structure having a base material made of paper, at least the outermost and innermost surfaces of which are constituted by synthetic resin layers, the container material being provided with a through-hole serving as a liquid take-out port, a lower plate made of a synthetic resin having a second through-hole of a size equivalent to or smaller than the first through-hole being bonded to the surface of the container material with the second through-hole of the lower plate being positioned in the first through-hole formed in the above-mentioned container material, an upper plate having an engaging projection which is fitted in the above-mentioned second through-hole of the lower plate from a surface side of the container material, and a synthetic resin film bonded to a periphery of the above-mentioned first through-hole and the top surface of the above-mentioned engaging projection of the upper plate from a rear side of the above-mentioned container material to define an opening device. In this paper container, the synthetic resin film includes a thin paper integrally laminated thereto. Because of this, the rigidity of the thin paper layer can be imparted to the synthetic resin film, thereby suppressing the elongating property of the synthetic resin film, so that cutting off of the through-hole part can be facilitated. Therefore, even those paper containers in which a synthetic resin layer having barrier property is used as a barrier layer in place of an aluminum foil layer can facilitate the cutting off of the through-hole part.

## Claims

1. A paper container **characterised in that** the paper container includes a laminate structure having a base material (1) made of paper, at least outermost (3) and innermost (7) surfaces of the laminate structure being constituted by synthetic resin layers, respectively, the base material being provided with a through-hole (2) serving as a liquid take-out port, wherein the paper container is of a laminate construction in which the through-hole is covered from inside by a layered material of at least two layers consisting of a synthetic resin layer (4) and a thin paper layer (8) integrated to each other; wherein
the thin paper layer comprises wood fiber and/or non-wood fiber having a basis weight of 5 to 65 g/m².

2. A paper container according to Claim 1, **characterized in that** respective interlayer strengths between the thin paper layer and each of adjacent synthetic resin layers in the layered material that covers the through-hole from inside are at least 30 g/15 mm or more.

3. A paper container according to Claim 1 or 2, **characterized in that** at least one synthetic resin layer of the layered material that covers the through-hole from inside has at least barrier property or light-shielding property.

4. A paper container according to Claim 1 or 2, **characterized in that** at least one thin paper layer of the layered material that covers the through-hole from inside is imparted with at least barrier property or light-shielding property by printing or the like.

5. A paper container **characterized in that** the paper container includes a container material of a laminate structure having a base material (1) made of paper, at least outermost (3) and innermost (7) surfaces of the laminate structure being constituted by synthetic resin layers, the container material being provided with a first through-hole (2) serving as a liquid take-out port, a lower plate (18) made of a synthetic resin provided with a second through-hole of a size equivalent to or smaller than the first through-hole being bonded to the surface of the container material with the second through-hole of the lower plate (18) being positioned in the first through-hole formed in the container material, and an upper plate (19) having an engaging projection (20) which is fitted in the second through-hole of the lower plate from a surface side of the container material, and a synthetic resin film bonded to a periphery of the first through-hole and the top surface of the engaging projection of the upper plate from a rear side of the container material to define an opening device, wherein the synthetic resin film comprises a thin paper (26) integrally laminated thereto to form a layered material comprising two or more layer; and
the thin paper laminated to the layered material comprises wood fiber and/or non-wood fiber having a basis weight of 5 to 65 g/m².

6. A paper container according to Claim 5, **characterized in that** the interlayer strengths between the thin paper layer and the adjacent layers are at least 30 g/15 mm or more.

7. A paper container according to Claim 5 or 6, **characterized in that** at least one layer of the layered material has at least barrier property or light-shielding property.

8. A paper container according to Claim 5, 6 or 7, **characterized in that** at least one thin paper is imparted with at least barrier property or light-shielding property by printing or the like.

## Patentansprüche

1. Papierbehälter, **dadurch gekennzeichnet, dass** der Papierbehälter aufweist:
eine Laminatstruktur mit einem Basismaterial (1) aus Papier,
zumindest eine äußerste (3) bzw. eine innerste (7) Fläche der Laminatstruktur, die aus einer synthetischen Harzschicht besteht, wobei
das Basismaterial mit einem durchgängigen Loch (2) ausgestattet ist, das als Flüssigkeitsauslassanschluss dient, und
der Papierbehälter eine Laminatkonstruktion aufweist, in welcher das durchgängige Loch von der Innenseite her durch ein Schichtmaterial mit mindestens zwei Schichten bedeckt ist, die aus einer synthetischen Harzschicht (4) und einer dünnen Papierschicht (8), die miteinander verbunden sind, besteht; wobei
die dünne Papierschicht Holzfasern und/oder Nichtholzfasern mit einem Basisgewicht von 5 bis 65 g/m² umfasst.

2. Papierbehälter nach Anspruch 1, **dadurch gekennzeichnet, dass** die entsprechenden Zwischenschichtstärken zwischen der dünnen Papierschicht und jeder der benachbarten synthetischen Harzschichten in dem Schichtmaterial, das das durchgängige Loch von der Innenseite bedeckt, mindestens 30 g/15 mm oder mehr beträgt.

3. Papierbehälter nach Anspruch 1 oder 2, **dadurch gekennzeichnet, dass** mindestens eine der synthetischen Harzschichten des Schichtmaterials, das das durchgängige Loch von der Innenseite her bedeckt, zumindestens eine Sperreigenschaft oder leichte Abschirmeigenschaft aufweist.

4. Papierbehälter nach Anspruch 1 oder 2, **dadurch gekennzeichnet, dass** mindestens eine dünne Papierschicht des Schichtmaterials, das das durchgängige Loch von der Innenseite her bedeckt, mittels Drucken oder Ähnlichem mit zumindest einer Sperreigenschaft oder leichten Abschirmeigenschaft ausgestattet ist.

5. Papierbehälter, **dadurch gekennzeichnet, dass** der Papierbehälter aufweist:
ein Behältermaterial aus Laminatstruktur mit einem Basismaterial (1) aus Papier,
zumindest eine äußerste (3) bzw. eine innerste (7) Fläche der Laminatstruktur, die aus einer synthetischen Harzschicht besteht, wobei
das Behältermaterial mit einem ersten durchgängigen Loch (2) ausgestattet ist, das als Flüssigkeitsauslassanschluss dient,
eine an die Fläche des Behältermaterials gebondete untere Platte (18), die aus einem synthetischen Harz hergestellt ist und mit einem zweiten durchgängigen Loch ausgestattet ist, das in seiner Größe äquivalent oder kleiner zu dem ersten durchgängigen Loch ist, wobei das zweite durchgängige Loch der unteren Platte (18) in dem ersten durchgängigen Loch, das in dem Behältermaterial gebildet ist, angeordnet ist,
eine obere Platte (19), die eine verbindende Auskragung (20) aufweist, die in das zweite durchgängige Loch der unteren Platte von einer Flächenseite des Behältermaterials eingepasst ist, und
einen synthetischen Harzfilm, der an eine Peripherie des ersten durchgängigen Lochs und eine obere Fläche der verbindenden Auskragung der oberen Platte von einer rückwärtigen Seite des Behältermaterials gebonded ist, um eine Öffnungsvorrichtung zu definieren, wobei
der synthetische Harzfilm ein dünnes Papier (26) aufweist, das integral daran laminiert ist, um ein Schichtmaterial mit zwei oder mehr Schichten zu bilden; und
das dünne Papier, das an das Schichtmaterial laminiert ist, Holzfasern und/oder Nichtholzfasern mit einem Basisgewicht von 5 bis 65 g/m² umfasst.

6. Papierbehälter nach Anspruch 5, **dadurch gekennzeichnet, dass** die Zwischenschichtstärken zwischen der dünnen Papierschicht und den benachbarten Schichten mindestens 30 g/15 mm oder mehr betragen.

7. Papierbehälter nach Anspruch 5 oder 6, **dadurch gekennzeichnet, dass** mindestens eine Schicht des Schichtmaterials zumindestens eine Sperreigenschaft oder leichte Abschirmeigenschaft aufweist.

8. Papierbehälter nach Anspruch 5, 6 oder 7, **dadurch gekennzeichnet, dass** mindestens ein dünnes Papier mittels Drucken oder Ähnlichem mit zumindest einer Sperreigenschaft oder leichten Abschirmeigenschaft ausgestattet ist.

## Revendications

1. Contenant en papier **caractérisé en ce que** le contenant en papier inclut une structure stratifiée ayant un matériau de base (1) fait de papier, au moins les surfaces la plus extérieure (3) et la plus intérieure (7) de la structure stratifiée étant constituées par des couches de résine synthétique, respectivement, le matériau de base étant doté d'un trou traversant (2) servant d'ouverture de prélèvement de liquide, dans lequel le contenant en papier a une structure stratifiée dans laquelle le trou traversant est recouvert de l'intérieur par un matériau en couches à au moins deux couches consistant en une couche de résine synthétique (4) et en une couche de papier mince (8) formant un tout unitaire l'une avec l'autre ; dans lequel la couche de papier mince comprend une fibre de bois et/ou une fibre qui n'est pas de bois ayant une masse surfacique de 5 à 65 g/m².

2. Contenant en papier selon la revendication 1, **caractérisé en ce que** les résistances intercouches respectives entre la couche de papier mince et chacune des couches de résine synthétique adjacentes dans le matériau en couches qui recouvre le trou traversant depuis l'intérieur sont d'au moins 30 g/15 mm ou plus.

3. Contenant en papier selon la revendication 1 ou 2, **caractérisé en ce qu'**au moins une couche de résine synthétique du matériau stratifié qui recouvre le trou traversant depuis l'intérieur a au moins une propriété barrière ou une propriété d'écran à la lumière.

4. Contenant en papier selon la revendication 1 ou 2, **caractérisé en ce qu'**au moins une couche de papier mince du matériau stratifié qui recouvre le trou traversant depuis l'intérieur est dotée d'au moins une propriété barrière ou propriété d'écran à la lumière par impression ou similaire.

5. Contenant en papier **caractérisé en ce que** le contenant en papier inclut un matériau de contenant à structure stratifiée ayant un matériau de base (1) fait de papier, au moins les surfaces la plus extérieure (3) et la plus intérieure (7) de la structure stratifiée étant constituées par des couches de résine synthétique, le matériau du contenant étant doté d'un premier trou traversant (2) servant d'ouverture de prélèvement de liquide, d'une plaque inférieure (18) faite d'une résine synthétique dotée d'un second trou traversant d'une dimension équivalente à, ou plus petite que, celle du premier trou traversant qui est lié à la surface du matériau du contenant avec le second trou traversant de la plaque inférieure (18) étant placée dans le premier trou traversant formé dans le matériau du contenant, et d'une plaque supérieure (19) ayant une protubérance d'engagement (20) qui est adaptée dans le second trou traversant de la plaque inférieure à partir d'un côté de surface du matériau du contenant, et d'un film de résine synthétique lié à une périphérie du premier trou traversant et à la surface du haut de la protubérance d'engagement de la plaque supérieure à partir d'un côté arrière du matériau du contenant pour définir un dispositif d'ouverture, dans lequel le film de résine synthétique comprend un papier mince (26) stratifié en un tout unitaire à celui-ci pour former un matériau à couches comprenant deux couches ou plus ; et
le papier mince stratifié au matériau stratifié comprend une fibre de bois et/ou une fibre qui n'est pas de bois ayant une masse surfacique de 5 à 65 g/m².

6. Contenant en papier selon la revendication 5, **caractérisé en ce que** les résistances intercouches entre la couche de papier mince et les couches adjacentes sont d'au moins 30 g/15 mm ou plus.

7. Contenant en papier selon la revendication 5 ou 6, **caractérisé en ce qu'**au moins une couche du matériau stratifié a au moins une propriété barrière ou d'une propriété d'écran à la lumière.

8. Contenant en papier selon la revendication 5, 6 ou 7, **caractérisé en ce qu'**au moins un papier mince est doté d'au moins une propriété barrière ou propriété d'écran à la lumière par impression ou similaire.
